# EUROPEAN PATENT SPECIFICATION

(11) **EP 2 792 941 B1**
(45) Date of publication and mention of the grant of the patent: **04.01.2017**
(21) Application number: 12822956.4
(22) Date of filing: 12.12.2012
(51) Int. Cl.: F21S 11/00, E04F 17/06, E04D 13/03

(54) **DEVICE FOR CAPTURING, TRANSMITTING AND DIFFUSING NATURAL LIGHT INTO INTERIOR SPACES, WHICH COMPRISES A CONDUIT OF INVERTED FRUSTOPYRAMIDAL FORM AND A DIFFUSER UNIT THAT EMERGES TRANSVERSELY WITH RESPECT TO THE HORIZONTAL PLANE OF THE CEILING OF A ROOM**
EINRICHTUNG ZUR AUFNAHME, WEITERLEITUNG UND DIFFUSION VON NATÜRLICHEM LICHT IN INNENRÄUMEN, UMFASSEND EINE LEITUNG IN FORM EINES UNGEKEHRTEN KEGELSTUMPFS UND EIN DIFFUSORELEMENT, DER SENKRECHT VON DER HORIZONTALEN EBENE EINER ZIMMERDECKE HERAUSRAGT
DISPOSITIF CAPTEUR, TRANSMETTEUR ET DIFFUSEUR DE LUMIÈRE NATURELLE DANS DES ESPACES INTÉRIEURS, COMPRENANT UN CONDUIT EN FORME DE PYRAMIDE TRONQUÉE INVERSÉE, ET UN BLOC DIFFUSEUR ÉMERGEANT DE MANIÈRE TRANSVERSALE PAR RAPPORT AU PLAN HORIZONTAL DU FAUX PLAFOND D'UNE PIÈCE

(30) Priority: 13.12.2011 CL 31412011
(43) Date of publication of application: 22.10.2014
(73) Proprietor: Universidad De Chile, Santiago (CL)
(72) Inventor: SILVA ROQUEFORT, Rebeca Jazmín Millaray, El Bosque Santiago (CL); WOLFF CECCHI, Maria Cecilia, Providencia Santiago (CL)
(74) Representative: Curell Suñol S.L.P.
(86) International application number: PCT/CL2012/000071
(87) International publication number: WO 2013/086648

(56) References cited:
- CA-A1- 2 253 024
- CN-U- 201 652 083
- DE-U1-202009 001 048
- DE-U1-202012 001 989
- JP-A- 2003 308 715
- US-A- 4 462 392
- US-A- 5 950 340
- US-A1- 2006 174 867
- US-A1- 2011 103 088
- US-B2- 6 363 667

## Description

### Technical field

The present invention refers to a device for transmitting natural light that captures, conveys and diffuses the light into interior spaces. The utility model particularly refers to a device that captures, conveys and diffuses sunlight into interior spaces within buildings contributing to light and ornament the building with a simple and easy to install design.

### Background of the invention

Built spaces, and mainly those spaces designated as secondary, such as bathrooms, hallways and family rooms, generally lack a direct access to natural light due to the absence of lateral or upper windows to make this possible. For this reason, these spaces are commonly lighted in the daytime by artificial light, thus causing economic damage and unfavorably affecting habitability and visual comfort.

When it is not possible to make an intervention with invasive procedures in an already built space in order to install skylights or windows, it is necessary then to seek new strategies. Thus it becomes necessary to develop devices that may convey natural light from the outside to those places where light does not penetrate, using the benefit they give as a means to provide an atmosphere, so as to light and revitalize the dark spaces. This proposal to modify already built spaces combined with the new illumination technologies should also provide characteristics of aesthetic and visual comfort, unlike those of the traditional fixtures for artificial lighting, should also be easy to install, and should be configured to allow using inexpensive materials.

In the state of the art there are devices that convey sunlight to poorly lighted spaces, capturing said light through a translucent plate or piece installed on the roof of a building. This plate is connected to a duct made of a reflecting material that conveys the light to the opposite end thereof where a light diffusing element is arranged installed on the ceiling of the room that is to be lighted with natural light. A great part of these inventions differ in the light capturing element that may be a flat plate or a translucent dome as disclosed in documents such as GB2400885, FR8813748, US6604329, US2002/0051297, US5613333 and US4733505.

With reference to the configuration of the duct that reflects and conveys the light from the capturing plate to the diffuser, the shapes commonly used are straight tubes, as in JP2011-119202, JP10-2011-0012982 and WO2010/070169; flexible tubes that allow to be easily adapted to the different angles existing between ceiling and roof - as in patents GB2431959, WO2007/140513, GB2425134, GB2400885, FR8813748 and US5502935; and configured as a truncated pyramid with the major base thereof in the diffuser area as in patents US2003/0126811, US6363667, US5613333.

Regarding the diffuser configuration, the use of diffuser plates horizontally oriented, convex or configured as domes is common to all inventions, as it may be appreciated in patents WO2011/071945, JP2011-119202, WO2010/070169, MX2009004706, WO2007/140513, GB2400885, FR8813748, US2011/0162304, US5528471, among others.

The present state of the art does not entirely solve either efficiently or effectively the technical problem associated with light conveyance. Neither does it solve the specific technical problem associated with the need to give a special appearance to the light diffuser element so that it may be identifiable or distinguishable from a lighting fixture powered by electricity, while not having an influence on the light intensity, color and quality. Finally, the specific technical problem associated with the difficulty of installing all the elements that configure the device has not yet been solved.

The solution proposed in this invention corresponds to a device for transmitting natural light that captures, conveys and diffuses the light, with a design proposal that meets the aesthetic and spatial characteristics associated to comfort and perception of the users who are staying in the area where it is located.

The invention comprises three sections: first a light transmitting duct configured as an inverted truncated pyramid, a diffuser block that emerges transversely to the horizontal plane of the ceiling and a connecting element to provide a finish to the joint between said transmitting duct and said diffuser block.

The main advantage of the device is its simple construction and installation that, without negatively altering the surroundings, allows solving an energetic need with ambient characteristics of quality, color and intensity of the emitted light that let the user perceive that the illumination is being supplied by sunlight and not by artificial light.

### Detailed Description

The present invention consists in a sunlight capturing, transmitting and diffusing device that comprises a light capturing and transmitting duct configured as an inverted truncated pyramid (8) with properties of surface reflection, which at its upper end has a translucent plate that receives natural light, adaptable to the conditions of the existing cover; a diffuser block (6) that emerges transversely to the horizontal plane of the ceiling with properties of total internal reflection; and a connecting element that is placed against the ceiling to provide a finish to the joint between said transmitting duct and said diffuser block (2).

The device captures natural light through a translucent plate (7) located on the upper plane of the duct configured as an inverted truncated pyramid, placed against the room ceiling and connected to said duct by means of the pyramid upper flanges (4). Given the natural reflection produced on the surfaces of the reflecting material of said duct and by the angle of incidence provided by said duct configured as an inverted truncated pyramid, the light is conveyed to the opposite end of said duct where the lower longitudinal flanges (9) at the bottom of the pyramid are connected to a light diffusing plate (5). The diffuser block emerges transversely to the horizontal plane of the room ceiling in the manner of a ceiling lighting fixture. Finally, in order to secure the device and provide a suitable finish, the joint between said transmitting duct and said diffuser block is hidden with a plastic lower base (2) attached by screws (1) and a stainless steel fixing shim (3) to said diffuser block, defining a perimetric edge of the exposed block. In this way the block does not emerge abruptly from the ceiling

It must be noted that the diffuser block provides a distinguishable spatial and aesthetic appearance to the device, bestowing distinctive ambient features of color and luminous intensity.

The simplicity of the device is reflected on the ease of installation thereof, which is mainly provided by the joint element between the diffuser block and the duct of reflecting material, where said joint is then hidden by a connecting element attached to the room ceiling. Said connecting element comprises a cavity traversed by said diffuser block and a space to allow attachment to said diffuser block.

The properties of the materials forming the different components are important for the device functionality. The diffuser block possesses the properties of total internal reflection present in materials such as glass, polymethyl-methacrylate, Plexiglas, optic fiber and transparent acrylic; the duct configured as an inverted truncated pyramid has properties of surface reflection that allow to conduct and convey light, present in materials such as acrylic, mirror glass and metals, as aluminum; whereas the transparent plate placed against said duct is made of materials such as glass, polycarbonate, transparent tile, polymethyl-methacrylate or acrylic.

The present invention succeeds in making interventions in spaces, obtaining in turn constructive and functional benefits such as simplicity, ease of installation and accessibility of the materials used. It also procures the level, color, intensity and quality of the transmitted light that distinguish the innovation and allow to differentiate it in terms of the design proposal and related features associated with comfort and perception of the users who are staying in the area wherein it is located.

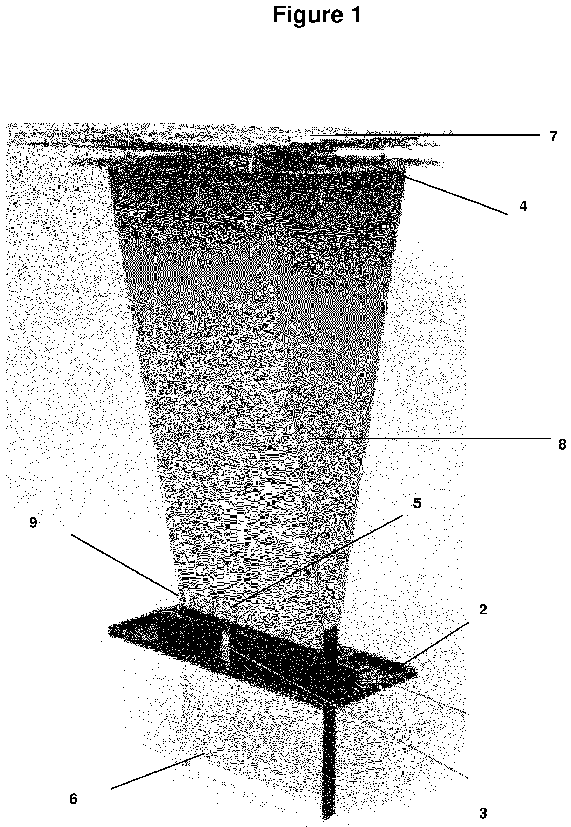

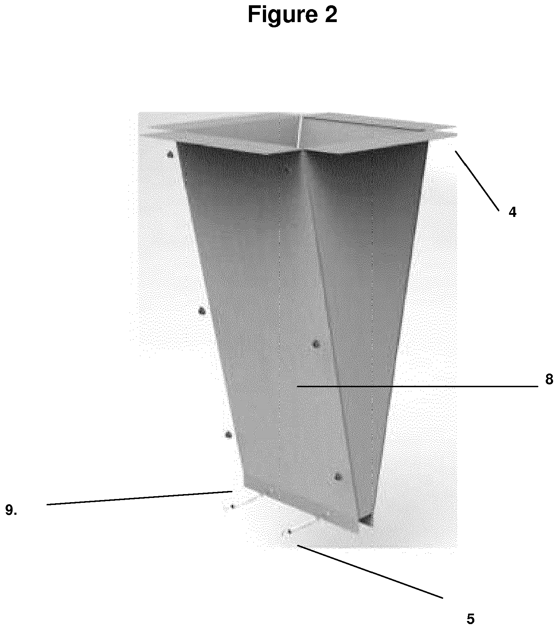

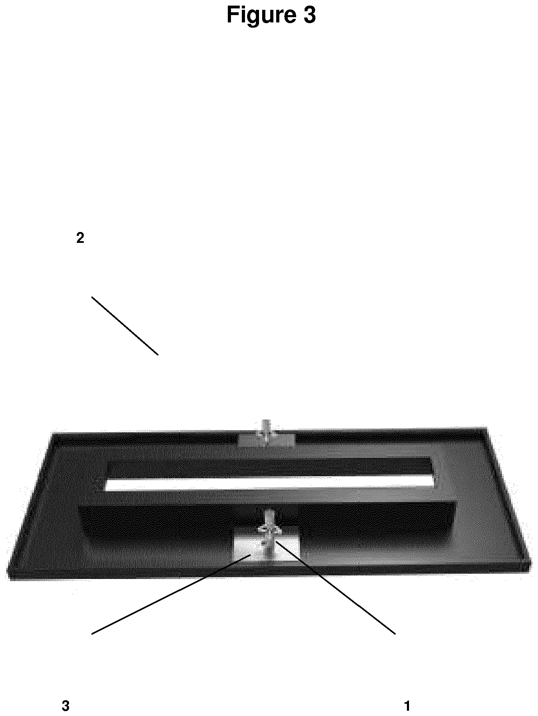

## Claims

1. A device for capturing, transmitting and diffusing natural light into interior spaces within buildings that comprises:
a) a duct for capturing and transmitting light, configured as an inverted truncated pyramid (8), with properties of surface reflection and having on its upper end a translucent plate (7) adaptable to an existing cover that receives natural light;
b) a diffuser block with properties of total internal reflection that, when installed, emerges transversely to the horizontal plane of a ceiling in the manner of a ceiling lighting fixture and that is connected to the light capturing and transmitting duct at the end opposite to the translucent plate (7);
c) a connecting element to provide a finish to the joint between said transmitting duct and said diffuser block.

2. Device according to claim 1, wherein the connecting element comprises a cavity traversed by said diffuser block and a fastening element for attachment to said block.

3. Device according to claim 2, wherein said connecting element is placed against the ceiling.

4. Device according to claim 1, wherein when installed said translucent plate (7) is joined to said existing cover.

5. Device according to claim 4, wherein the transparent plate (7) is made of glass, polycarbonate, transparent tile, polymethyl-methacrylate or acrylic.

6. Device according to claim 1, wherein the light capturing and transmitting duct is made of materials that comprise acrylic, mirror glass or metal.

7. Device according to claim 6, wherein said metal is aluminum.

8. Device according to claim 1, wherein the diffuser block is of transparent acrylic, polymethyl-methacrylate, Plexiglas, optic fiber or glass.

## Patentansprüche

1. Vorrichtung zum Sammeln, Weiterleiten und Verteilen von Tageslicht in Innenräume in Gebäuden, die aufweist:
a) einen Kanal zum Sammeln und Weiterleiten von Licht, der als umgekehrter Pyramidenstumpf (8) ausgebildet ist, mit Eignung zur Oberflächenreflexion und der an seinem oberen Ende eine lichtdurchlässige Platte (7) aufweist, die an eine vorhandene Abdeckung anpassbar ist, die Tageslicht aufnimmt,
b) ein Streublock mit Eignung zur vollständigen inneren Reflexion, der, wenn er eingebaut ist, quer zu der horizontalen Ebene einer Decke in der Art einer Deckenbeleuchtungshaltevorrichtung hervortritt, und der mit dem lichtsammelnden und -weiterleitenden Kanal an dem der lichtdurchlässigen Platte (7) gegenüberliegenden Ende verbunden ist, und
c) ein Verbindungselement zum Bereitstellen eines Endstücks für die Verbindung zwischen dem Weiterleitungskanal und dem Streublock.

2. Vorrichtung nach Anspruch 1, bei der das Verbindungselement einen Hohlraum, durch den der Streublock hindurchtritt, und ein Befestigungselement zum Befestigen an dem Block aufweist.

3. Vorrichtung nach Anspruch 2, bei der das Verbindungselement an der Decke anliegt.

4. Vorrichtung nach Anspruch 1, bei der die lichtdurchlässige Platte (7), wenn sie eingebaut ist, mit der vorhandenen Abdeckung verbunden ist.

5. Vorrichtung nach Anspruch 4, bei der die durchsichtige Platte (7) aus Glas, Polykarbonat, einer durchsichtigen Kachel, Polymethylmethacrylat oder Acryl hergestellt ist.

6. Vorrichtung nach Anspruch 1, bei der der lichtsammelnde und -weiterleitende Kanal aus Materialien hergestellt ist, die Acryl, Spiegelglas oder Metall umfassen.

7. Vorrichtung nach Anspruch 6, bei der das Metall Aluminium ist.

8. Vorrichtung nach Anspruch 1, bei der der Streublock aus durchsichtigem Acryl, Polymethylmethacrylat, Plexiglas, Lichtleitfaser oder Glas ist.

## Revendications

1. Dispositif pour capter, transmettre et diffuser de la lumière naturelle dans des espaces intérieurs de bâtiments, comportant :
a) un conduit pour capter et pour transmettre de la lumière, configuré comme une pyramide tronquée inversée (8) ayant des propriétés de surface réfléchissante et pourvue, à son extrémité supérieure d'une plaque (7) translucide adaptable à une couverture existante qui reçoit de la lumière naturelle ;
b) un bloc diffuseur ayant des propriétés de réflexion totale interne, qui, après son installation, émerge transversalement jusqu'à une surface horizontale d'un plafond à la façon d'un éclairage fixé au plafond et qui est connecté au conduit pour capter et pour transmettre de la lumière, à l'extrémité opposée de la plaque translucide (7) ;
c) un élément de connexion pour réaliser une finition avec le joint entre ledit conduit de transmission et ledit bloc diffuseur.

2. Dispositif selon la revendication 1, dans lequel l'élément de connexion comprend une cavité traversée par ledit bloc diffuseur et un élément de fixation pour la fixation audit bloc.

3. Dispositif selon la revendication 2, dans lequel ledit élément de connexion est placé contre le plafond.

4. Dispositif selon la revendication 1, dans lequel, ladite plaque translucide (7), après son installation, est jointe à ladite couverture existante.

5. Dispositif selon la revendication 4, dans lequel la plaque transparente (7) est réalisée en verre, en polycarbonate, en une tuile transparente, en polyméthyle-métacrylate ou en acrylique.

6. Dispositif selon la revendication 1, dans lequel le conduit pour capter et pour transmettre de la lumière est réalisé en un matériau comprenant de l'acrylique, du verre miroir ou du métal.

7. Dispositif selon la revendication 6, dans lequel ledit métal est de l'aluminium.

8. Dispositif selon la revendication 1, dans lequel le bloc diffuseur est en acrylique transparent, en polyméthyle-métacrylate, en plexiglas, en fibres optiques ou en verre.
